# EUROPÄISCHE PATENTANMELDUNG

(11) **EP 4 659 900 A1**
(43) Veröffentlichungstag der Anmeldung: **10.12.2025**
(21) Anmeldenummer: 25180668.3
(22) Anmeldetag: 04.06.2025
(51) Int. Cl.: B24B 41/06, B23B 23/02

(54) **REITSTOCKBAUGRUPPE, SCHLEIFMASCHINE UND VERFAHREN ZUM SPITZENWECHSEL**

(30) Priorität: 05.06.2024 DE 102024115608
(71) Anmelder: Fritz Studer AG, 3612 Steffisburg (CH)
(72) Erfinder: Bertolino, Antonio, 3612 Steffisburg (CH); Bratch, Jona, 3600 Thun (CH); Marugg, Christoph, 3600 Thun (CH); Howald, André, 3627 Heimberg (CH)
(74) Vertreter: Witte, Weller & Partner Patentanwälte mbB

(57) **Zusammenfassung**

Eine Reitstockbaugruppe (60) für eine Schleifmaschine (10) weist eine Basis (96) und einen Tisch (98) auf, der an der Basis (96) gelagert und insbesondere relativ zur Basis (96) verfahrbar ist. Der Tisch (98) trägt einen Aufbau (114), der eine Schnittstelle (116) mit einer Aufnahme (120) für ein eine Spitze (62, 106, 160, 170, 180, 190, 200, 210, 220, 230) tragendes Lagerstück (102) zur Werkstückaufnahme bereitstellt. Die Spitze (62, 106, 160, 170, 180, 190, 200, 210, 220, 230) weist eine Spitzenachse (108) auf. Die Schnittstelle (116) ist seitlich gegenüber der Spitzenachse (108) versetzt. Eine Schleifmaschine (10) weist ein Maschinengestell (14) und eine Reitstockbaugruppe (60) auf, die am Maschinengestell (14) angeordnet ist. Ein Verfahren zum Spitzenwechsel bei einer Schleifmaschine (10) nutzt eine solche Reitstockbaugruppe (60).

## Beschreibung

Die vorliegende Offenbarung betrifft eine Reitstockbaugruppe, eine Schleifmaschine mit einer Reitstockbaugruppe sowie ein Verfahren zum Spitzenwechsel bei einer Schleifmaschine. Allgemein befasst sich die vorliegende Offenbarung mit Schleifmaschinen, insbesondere Rundschleifmaschinen, und deren Baugruppen, die zur Abstützung und Führung von Werkstücken mittels Spitzen ausgebildet sind.

Schleifmaschinen, die insbesondere als Rundschleifmaschinen gestaltet sind, sind beispielsweise aus der EP 2 682 229 A2 und der EP 2 962 806 A2 bekannt. Die EP 2 682 229 A2 beschreibt eine Rundschleifmaschine mit einem zusätzlichen Prozessmodul, das am Maschinenbett gelagert und für einen Werkstückwechsel sowie für Messaufgaben verwendbar ist. Die EP 2 962 806 A2 beschreibt eine Rundschleifmaschine mit einem Zusatzmodul, das in eine Längsführung eines Werkstücktisches integriert ist, wobei das Zusatzmodul einen Modulträger aufweist, der zur Aufnahme einer Messeinheit oder dergleichen dient, wobei der Modulträger parallel zur Längsführung eine individuelle Verfahrachse mit motorischem Antrieb aufweist. Die Verfahrachse für den Modulträger ist in die Längsführung des Werkstücktisches eingebettet.

Aus der DE 203 10 474 U1 ist ein als Spannvorrichtung für Rundschleifmaschinen verwendbarer Rotations-Setzstock bekannt, der mit unterschiedlichen Spitzen bestückbar ist. Dem Rotations-Setzstock ist eine Kinematik zugeordnet, die Bewegungen in zwei Achsen (Längsachse und Querachse) ermöglicht. Aus der DE 199 17 146 A1 ist ein Nullpunktspannsystem zum Spannen und Zentrieren von Werkzeugen, Werkstücken, Maschinenbauteilen oder dergleichen bekannt.

Aus der ES 2 339 316 A1 ist ein Bearbeitungszentrum für Holzwerkstücke bekannt, mit einem Abschnitt, der eine Spitze und eine Gegenspitze umfasst, um die zu bearbeitenden Holzwerkstücke dazwischen zu spannen, wobei in der Gegenspitze ein Halteelement integriert ist, das eine Spannfläche zum Halten der Holzwerkstücke in einer exzentrisch versetzten Position relativ zur Spitze bestimmt. Auf diese Weise können Holzwerkstücke mit nicht-konzentrischer Erstreckung bearbeitet werden, weil das Halteelement einen exzentrischen Umlauf erlaubt. Die Gestaltung der ES 2 339 316 A1 ist nicht für das Innenschleifen durch die Spitze hindurch geeignet.

Aus der DE 10 2018 107 782 A1 ist eine Schleifmaschine mit einem Reitstockaufbau bekannt. Der Reitstock weist einen Träger mit einem Ausleger und einen Körper mit einer Spitze auf, der an dem Ausleger befestigt ist. Mit dieser Gestaltung ergibt sich in dem aus Sicht des Werkstücks hinter der Spitze liegenden Bereich ein Freiraum, in dem eine Abrichteinrichtung für eine Schleifscheibe der Schleifmaschine platziert ist. Die Gestaltung der DE 10 2018 107 782 A1 ist nicht für das Innenschleifen durch die Spitze hindurch geeignet.

Aus der DE 10 2013 005 940 A1 ist ein Spannsystem zum Spannen eines Werkstücks an einem Tisch eines Mehrachsbearbeitungszentrums bekannt, mit einem Spannfutter und einem gegenüberliegendem Zentrierdorn. Aus der DE 10 2018 107 782 A1 ist eine Rundschleifmaschine bekannt, die für das Schleifen von langen, dünnen Rundstangen mittels Schälschleifen ausgebildet ist. Aus der WO 2016/202729 A1 ist eine Schleifmaschine bekannt, die dazu ausgebildet ist, ein Werkstück zeitparallel mittels Innenschleifen und Außenschleifen zu bearbeiten.

Werkstücke zur Bearbeitung in Rundschleifmaschinen sind häufig stabförmig oder stangenförmig gestaltet. Üblicherweise gibt es eine Längsachse, die gegebenenfalls auch Symmetrieachse des Werkstücks ist. Die Bearbeitung in Rundschleifmaschinen erfolgt regelmäßig mit rotatorisch angetriebenen Schleifscheiben, wobei regelmäßig sowohl das Werkstück als auch das Werkzeug (Schleifscheibe) rotatorisch angetrieben werden. Die Bearbeitung kann als Außenbearbeitung an einem Außenumfang oder als Innenbearbeitung an einem Innenumfang des Werkstücks erfolgen.

Werkstücke werden regelmäßig an ihren beiden Enden aufgenommen und auf diese Weise eingespannt. Bei besonders langen Werkstücken kann entlang der Längserstreckung zusätzlich eine Abstützung über Lünetten oder dergleichen erfolgen.

Beispielhaft weist eine Schleifmaschine eine Werkstückspindel mit Werkstückhalter auf, so dass Werkstücke an zumindest einem Ende eingespannt und rotatorisch um die Längsachse antreibbar sind. Der Werkstückhalter der Werkstückspindel kann grundsätzlich als Spitze, Spannfutter, Zentrierfutter, Mitnehmerspitze oder dergleichen gestaltet sein.

Am gegenüberliegenden Ende kann so dann ein Reitstock angeordnet sein, der ebenso einen Werkstückhalter bereitstellt. Dabei kann es sich um eine Spitze handeln, die zum Halten und Zentrieren des Werkstücks dient. Spitzen können grundsätzlich feststehend oder mitlaufend sein. Grundsätzlich sind auch sogenannte angetriebene Spitzen mit eigenem Drehantrieb denkbar.

Ein Wechsel der Spitzen kann beispielsweise dann erforderlich sein, wenn unterschiedliche Bearbeitungsaufgaben nacheinander abgearbeitet werden müssen. Dies kann unterschiedliche Werkstücke betreffen, aber auch unterschiedliche Bearbeitungsvorgänge bei ein und demselben Werkstück. Beispielsweise gibt es Werkstücke, die sowohl außen mittels Außenschleifen als auch innen mittels Innenschleifen zu bearbeiten sind.

Es besteht daher bei bestimmten Anwendungen mehr oder weniger regelmäßig der Bedarf an einem Wechsel der beim Reitstock verwendeten Spitze. Spitzen zur Zentrierung und Aufnahme von Werkstücken können verschiedenartig gestaltet sein. Dies umfasst beispielsweise Vollspitzen, Halbspitzen, Hohlspitzen, Halbhohlspitzen und Ähnliches. Insbesondere Hohlspitzen oder hohl gestaltete Spitzen erlauben die Bearbeitung einer Innenkontur des Werkstücks mittels Innenschleifen, wobei die Bearbeitung durch die Spitze hindurch erfolgen kann.

Beim Wechsel von Spitzen muss auf eine hochgenaue Ausrichtung und Zentrierung geachtet werden. Dies erhöht in aller Regel den Rüstaufwand. Aufgrund der Genauigkeitsanforderungen bringt ein (vollständig) automatisierter Spitzenwechsel große Herausforderungen mit sich.

Vor diesem Hintergrund liegt der vorliegenden Offenbarung die Aufgabe zugrunde, eine für einen schnellen und genauen Spitzenwechsel geeignete Reitstockbaugruppe anzugeben. Insbesondere soll die Reitstockbaugruppe für einen automatisierten Spitzenwechsel geeignet sein. Die Reitstockbaugruppe soll beim Spitzenwechsel eine hohe Genauigkeit gewährleisten. Die Reitstockbaugruppe soll möglichst auch eine Anpassung an unterschiedliche Werkstückgeometrien (Werkstücklängen) erlauben. Schließlich soll die Reitstockbaugruppe auch für einen automatisierten Werkstückwechsel geeignet sein. Ferner soll im Rahmen der vorliegenden Offenbarung eine Schleifmaschine mit einer solchen Reitstockbaugruppe angegeben werden. Schließlich soll ein Verfahren zum Betrieb einer Schleifmaschine angegeben werden, das eine offenbarungsgemäße Reitstockbaugruppe nutzt.

Gemäß einem ersten Aspekt bezieht sich die vorliegende Offenbarung auf eine Reitstockbaugruppe für eine Schleifmaschine, die Folgendes aufweist:
- eine Basis,
- einen Tisch, der an der Basis gelagert und insbesondere relativ zur Basis verfahrbar ist,

wobei der Tisch einen Aufbau trägt, der eine Schnittstelle mit einer Aufnahme für ein eine Spitze tragendes Lagerstück zur Werkstückaufnahme bereitstellt,
wobei die Spitze eine Spitzenachse aufweist, und
wobei die Schnittstelle seitlich gegenüber der Spitzenachse versetzt ist.

Auf diese Weise kann unter Nutzung der Schnittstelle der Spitzenwechsel deutlich vereinfacht werden. Ferner eignet sich die Reitstockbaugruppe für einen automatisierten Spitzenwechsel. Auch ein händischer Spitzenwechsel kann durch Bereitstellung der Schnittstelle vereinfacht werden.

Die seitlich gegenüber der Spitzenachse versetzte Schnittstelle ist so orientiert, dass die Spitzenachse die Schnittstelle nicht schneidet. Dies vereinfacht beispielsweise die Innenbearbeitung, wenn eine Innenschleifscheibe durch die Spitze hindurch in das Werkstück hineingeführt wird. Zu diesem Zweck sind Spitzen mit zumindest teilweise hohler Gestaltung bekannt.

Die Spitzenachse und die Längsachse des Werkstücks sind regelmäßig parallel zueinander bzw. sogar deckungsgleich orientiert. Mit anderen Worten sind die Spitzenachse und die Längsachse des Werkstücks bei diesen Ausgestaltungen koaxial zueinander orientiert. Obwohl die Schnittstelle seitlich versetzt ist, bleibt die Spitzenachse koaxial zur Längsachse des Werkstücks.

Wenn die Schnittstelle jedoch seitlich gegenüber der Spitzenachse versetzt ist, also beispielsweise radial von der Spitzenachse beabstandet ist, ergibt sich regelmäßig eine Fügerichtung für die Montage der Spitze bzw. von deren Lagerstück, die nicht parallel zur Spitzenachse ist. Mit anderen Worten ist die Fügerichtung beispielsweise quer, orthogonal oder zumindest um einen Winkel größer 45° gegenüber der Spitzenachse geneigt. Beispielsweise ist die Schnittstelle in einer Draufsicht seitlich gegenüber der Schnittstelle versetzt. Die Schnittstelle (bzw. deren Schnittstellenebene) kann vertikal orientiert sein, wodurch sich eine horizontale Einführrichtung ergibt.

In einer beispielhaften Ausgestaltung ist der Aufbau zumindest im Bereich der Schnittstelle von der Spitzenachse versetzt. Auf diese Weise wird genügend Platz für das Werkstück bereitgestellt. Der Bauraum im Arbeitsraum der Schleifmaschine wird gut genutzt. Das Werkstück ist gut einsehbar. Beispielsweise können die Reitstockbaugruppe, zumindest mit ihrem Aufbau, und ein Schleifspindelstock der Schleifmaschine auf unterschiedlichen Seiten der Längsachse angeordnet sein. Der Aufbau ist beispielhaft als Trägerwand und/oder ähnlich einem Lagerbock gestaltet, die/der sich vom Tisch aus erhebt.

Die Basis dient zu einer Befestigung der Reitstockbaugruppe an einem Maschinengestell oder Maschinenbett der Schleifmaschine. Insbesondere kann die Basis im Betrieb der Schleifmaschine stationär am Maschinengestell festgelegt sein. Der Tisch ist gegenüber der Basis verfahrbar. Auf diese Weise kann eine Stellachse bereitgestellt werden. Der Freiheitsgrad zwischen dem Tisch und der Basis kann auch als Hubachse bezeichnet werden, auch wenn regelmäßig von einer horizontalen Orientierung auszugehen ist.

Die offenbarungsgemäße Reitstockbaugruppe kann als Bestandteil einer Schleifmaschine gestaltet sein, die für die Innenbearbeitung (Innenschleifen) ausgebildet ist. Die Schleifmaschine weist eine Werkstückspindel zur Aufnahme und zum Antrieb eines Werkstücks auf, wobei das Werkstück durch die Werkstückspindel um eine Längsachse rotatorisch antreibbar ist. Die Reitstockbaugruppe ist der Werkstückspindel gegenüberliegend angeordnet, so dass das Werkstück dazwischen aufnehmbar ist. Die Spitzenachse ist koaxial zur Längsachse orientiert. Auf diese Weise ist die Reitstockbaugruppe besonders gut für die Innenbearbeitung geeignet, wenn die Spitze hohl gestaltet ist. Der aus Sicht des Werkstücks hinter der Spitze gelegene Bereich wird nicht durch die Schnittstelle belegt, so dass dort eine Schleifscheibe durch die Spitze hindurch in das Werkstück hineingeführt werden kann.

Gemäß einer beispielhaften Ausgestaltung ist der Tisch entlang einer Stellachse relativ zur Basis verfahrbar. Demgemäß kann die Reitstockbaugruppe als Reitstockbaugruppe mit einer integrierten Linearachse bezeichnet werden. Gemäß einer beispielhaften Ausgestaltung ist die Stellachse parallel zur Spitzenachse. Auf diese Weise kann die Öffnungsweite (beispielsweise Spitzenweite) zwischen zwei einander gegenüberliegenden Werkstückaufnahmen verändert werden.

Die Stellachse kann beispielsweise im Rahmen des Werkstückwechsels genutzt werden, um das Werkstück freizugeben, das zwischen zwei Aufnahmen, beispielsweise zwei Spitzen, eingespannt ist. Die Stellachse kann jedoch auch zur Anpassung an verschiedene Werkstücke, insbesondere an verschiedene Werkstücklängen genutzt werden. Die Stellachse ist regelmäßig eine aktive Achse, also eine mit einem Antrieb versehene Achse, die durch eine Steuereinrichtung der Schleifmaschine steuerbar ist.

In einer beispielhaften Ausgestaltung ist die Spitze eine stehende Spitze. Eine stehende Spitze ist am Lagerstück festgelegt und nicht relativ zum Lagerstück rotierbar. In einer beispielhaften Ausgestaltung ist die Spitze eine drehende Spitze. Eine drehende Spitze ist rotierbar am Lagerstück gelagert.

Gemäß einer weiteren beispielhaften Ausgestaltung ist die Aufnahme zur Aufnahme des Lagerstücks ausgebildet, das die Spitze trägt, wobei das Lagerstück und die Spitze eine Wechselspitze bilden. Grundsätzlich kann die Spitze vom Lagerstück lösbar sein, etwa durch eine Schaubverbindung oder dergleichen. Demgemäß kann ein Lagerstück mit unterschiedlichen Spitzen bestückt werden. Es ist jedoch grundsätzlich auch vorstellbar, das Lagerstück und die Spitze als integrales Bauteil auszuführen, bei dem die Spitze nicht vom Lagerstück lösbar ist.

Die Reitstockbaugruppe kann also mit unterschiedlichen Wechselspitzen bestückt werden. Die Schnittstelle erlaubt eine hochgenaue Positionierung und gegebenenfalls auch einen automatisierten Wechsel der Wechselspitze.

Gemäß einer weiteren beispielhaften Ausgestaltung weist die Aufnahme eine Anlagefläche für das Lagerstück auf, die parallel zur Spitzenachse ist. Da die Schnittstelle seitlich gegenüber der Spitzenachse versetzt ist, ist auch die Anlagefläche von der Spitzenachse beabstandet. Beispielhaft ist die Anlagefläche eine vertikale Fläche.

Gemäß einer weiteren beispielhaften Ausgestaltung weisen die Aufnahme und das Lagerstück einander zugewandte Kontaktflächen auf, insbesondere ringförmige oder ringabschnittsförmige Kontaktflächen. Auf diese Weise ergibt sich ein flächiger Kontakt zwischen der Spitze und dem Lagerstück. Die Position und Orientierung des Lagerstücks sind hierdurch zumindest in einigen Freiheitsgraden genau festgelegt.

Gemäß einer weiteren beispielhaften Ausgestaltung ist der Aufbau an einer einem Schleifspindelstock gegenüberliegenden Seite der Spitzenachse angeordnet, insbesondere an einer Bedienerseite. Auf diese Weise wird der Bauraum im Arbeitsraum der Schleifmaschine günstig genutzt. Der Schleifspindelstock mit der Schleifscheibe kann weiterhin günstig an das Werkstück heranfahren.

In einer beispielhaften Ausgestaltung kragt das die Spitze tragende Lagerstück ausgehend vom Aufbau seitlich aus, insbesondere in Richtung auf die Längsachse (des Werkstücks). Gemäß einer weiteren beispielhaften Ausgestaltung ist der Aufbau in einem Halbraum bezüglich der Spitzenachse angeordnet, der durch eine Ebene parallel zur Schnittstelle begrenzt ist, die die Spitzenachse schneidet. Im gegenüberliegenden Halbraum ist beispielsweise der Schleifspindelstock angeordnet.

Gemäß einer weiteren beispielhaften Ausgestaltung ist der Aufbau als Erhebung gegenüber dem Tisch gestaltet, deren erste Haupterstreckungsrichtung parallel zur Spitzenachse und deren zweite Haupterstreckungsrichtung orthogonal zu einer Grundfläche des Tisches ist. Mit anderen Worten ist der Aufbau beispielhaft ähnlich einem Bergrücken (bzw. eines Abschnitts davon) gestaltet. Alternativ kann der Aufbau als sich vertikal ausgehend vom Tisch erstreckende Konsole bezeichnet werden. Ähnlich einem Lagerbock beherbergt der Aufbau die Aufnahme für das Lagerstück.

In einer beispielhaften Ausgestaltung weist der Aufbau in einer vertikalen Ansichtsebene, die parallel zur Spitzenachse orientiert ist, einen Gipfel und zwei vom Gipfel abfallende Flanken auf, wobei eine Unterseite des Aufbaus an den Tisch ankoppelt. Auf diese Weise ähnelt der Lagerbock einem gleichschenkligen Dreieck. Innerhalb dieser Dreieckskontur ist das Lagerstück aufgenommen.

Gemäß einer weiteren beispielhaften Ausgestaltung weist der Aufbau eine Ausnehmung auf, die sich orthogonal zur Spitzenachse erstreckt und die Aufnahme beherbergt. Beispielhaft handelt es sich um eine den Aufbau vollständig durchragende Ausnehmung. Die Ausnehmung ist beispielhaft als Bohrung oder Zylinderausnehmung gestaltet. Auf diese Weise kann die beispielsweise scheibenförmige Aufnahme günstig in den Aufbau integriert werden.

Gemäß einer weiteren beispielhaften Ausgestaltung weist die Reitstockbaugruppe ferner einen Antrieb zur translatorischen Bewegung des Tisches relativ zur Basis auf, wobei der Antrieb einen Motor umfasst, der insbesondere an einer von der Spitze abgewandten Seite des Aufbaus an den Tisch ankoppelt. Auf diese Weise kann der Antrieb günstig in die Gestaltung der Reitstockbaugruppe integriert werden. Insbesondere hat der Antrieb auf diese Weise keine negativen Auswirkungen auf die mögliche Länge und/oder den möglichen Durchmesser des Werkstücks. Der Motor ist beispielsweise seitlich neben dem Tisch auf einer Bedienerseite der Wechselmaschine angeordnet.

In einer beispielhaften Ausgestaltung ähnelt die Basis einem Schlitten einer klassischen Linearführung, der wiederum mit dem Maschinengestell verbunden ist, beispielsweise durch eine Befestigung der Basis an einer Längsführung. Der Tisch weist demgemäß zumindest eine Führungsschiene auf, die linear verschieblich am Schlitten gelagert ist. Es wird also bei dieser Gestaltung nicht der Schlitten aktiv gegenüber der Führung bewegt, stattdessen wird die Führung aktiv gegenüber dem Schlitten bewegt, um den Aufbau zu verfahren.

Gemäß einer weiteren beispielhaften Ausgestaltung umfasst die Schnittstelle eine Einführachse zwischen der Aufnahme und dem die Spitze tragenden Lagerstück, wobei die Einführachse horizontal und relativ zur Spitzenachse schräg, insbesondere orthogonal, orientiert ist. Eine solche Einführbewegung erlaubt es, den Raum hinter dem Lagerstück mit der Spitze freizuhalten. Auf diese Weise verbessert sich die Eignung für die Innenbearbeitung und dergleichen.

Gemäß einer weiteren beispielhaften Ausgestaltung ist die Spitze aus der Gruppe ausgewählt, die Folgendes umfasst: Vollspitze, Halbspitze, Hohlspitze, Halbhohlspitze, Kegelstumpfspitze, Kegelstumpfhalbspitze, hohle Spitze und hohle Halbspitze. Die Spitze kann als feststehende oder mitdrehende Spitze gestaltet sein.

Eine Vollspitze ist eine massive Spitze mit einem üblicherweise konischen Endbereich, der spitz in Richtung auf das Werkstück zuläuft. Eine Halbspitze ist im Endbereich zumindest teilweise über einen Umfangsabschnitt abgetragen. Das spitze Ende ist regelmäßig noch vorhanden, der sich anschließende Konus ist beispielsweise an einer Seite abgeflacht oder ähnlich bearbeitet. Eine Vollspitze oder Halbspitze kann beispielsweise in eine Zentrierbohrung am Werkstück eingreifen.

Eine Hohlspitze weist eine konische Öffnung auf. Mit dieser konischen Innenfläche kann die Hohlspitze an einen Außendurchmesser des Werkstücks angreifen, beispielsweise an einer Außenkante. Eine Hohlspitze kann zumindest abschnittsweise ringförmig gestaltet sein. Eine Hohlspitze erlaubt eine Innenbearbeitung. Die Spitze der konischen Innenfläche der Hohlspitze weist vom Werkstück weg. Eine Halbhohlspitze ist eine teilweise geöffnete Hohlspitze, die im Bereich der Anlage am Werkstück zumindest abschnittweise als Ringabschnitt gestaltet ist.

Eine Kegelstumpfspitze ähnelt einer Vollspitze, deren spitzes Ende abgeschnitten ist, so dass beispielsweise eine flache Stirn verbleibt. Eine Kegelstumpfhalbspitze ähnelt demgemäß einer Halbspitze mit abgeflachtem Ende. Eine Kegelstumpfspitze oder Kegelstumpfhalbspitze kann an eine Innenfläche oder Innenkante des Werkstücks angreifen.

Eine hohle Spitze ähnelt einer Vollspitze oder Kegelstumpfspitze und weist darüber hinaus eine durchgehende Innenbohrung auf. Eine hohle Halbspitze ähnelt einer Halbspitze oder Kegelstumpfhalbspitze und weist darüber hinaus eine durchgehende Innenbohrung auf. Die hohle Spitze oder hohle Halbspitze ist zur Anlage an einer Innenfläche oder Innenkante des Werkstücks vorgesehen. Eine Innenbearbeitung ist möglich.

Im Rahmen der vorliegenden Offenbarung beziehen sich die Begriffe Halbspitze, Halbhohlspitze, hohle Halbspitze sowie Kegelstumpfhalbspitze nicht zwingend auf Spitzen, die tatsächlich hälftig (zu genau 180° über den Umfang) abgetragen sind. Üblicherweise ist bei diesen halben Spitzen ein Rest von mehr als 180° (also beispielsweise mehr als 190° oder mehr als 210°) bezogen auf den Umfang vorhanden. Der Begriff "halb" darf insoweit in Zusammenhang mit den Spitzen nicht einschränkend verstanden werden. Allgemein verbessern halbe Spitzen die Zugänglichkeit. Insbesondere bei Halbhohlspitzen und holen Halbspitzen kann ein Werkzeug für die Innenbearbeitung gegebenenfalls sogar seitlich (radial) in die Spitze einrücken.

Gemäß einer weiteren beispielhaften Ausgestaltung umfasst die Reitstockbaugruppe einen Satz aus zwei oder mehr unterschiedlichen Wechselspitzen, die bedarfsweise an der Schnittstelle gewechselt werden können. Ein Wechsel der Wechselspitzen kann grundsätzlich händisch oder automatisiert erfolgen. Im Falle eines automatisierten Wechsels ist geeignete Handhabungstechnik vorgesehen. In einer beispielhaften Ausgestaltung wird eine für einen Werkstückwechsel vorgesehene Handhabungseinrichtung (Roboter oder dergleichen) auch für den Wechsel der Wechselspitze an der Schnittstelle genutzt.

Gemäß einer weiteren beispielhaften Ausgestaltung umfasst die Schnittstelle ein Nullpunktspannsystem zur Befestigung und Ausrichtung des Lagerstücks mit der Spitze an der Aufnahme. Auf diese Weise kann die Wechselspitze wiederholgenau an der Aufnahme am Aufbau positioniert werden. Die Befestigung mit dem Nullpunktspannsystem kann kraftschlüssig und/oder formschlüssig erfolgen.

In einer beispielhaften Ausgestaltung wird ein einziger Spanner genutzt, um das Lagerstück der Wechselspitze an der Aufnahme zu positionieren und zu sichern. Auf diese Weise kann die Wechselspitze kompakt gestaltet sein. Mit anderen Worten kann ein einziges Nullpunktspannsystem mit einem männlichen Spannteil (beispielsweise bei der Wechselspitze) und einem weiblichen Spannteil (beispielsweise beim Aufbau) eine sichere und genaue Positionierung der Wechselspitze an der Reitstockbaugruppe erlauben.

Gemäß einer weiteren beispielhaften Ausgestaltung weist das Nullpunktspannsystem bei der Aufnahme einen einzigen Spanntopf und bei dem Lagerstück eine einzige Spanntasse auf, wobei das Nullpunktspannsystem in einem Spannzustand das Lagerstück am Spanntopf sichert, wobei die Spanntasse in den Spanntopf eingerückt ist, und in einem Freigabezustand das Lagerstück zur Entnahme vom Spanntopf freigibt.

Die Spanntasse befindet sich beispielsweise am Lagerstück an einer von der Spitze abgewandten Seite. Die Spanntasse kann in den Spanntopf eingeführt und dort hochgenau ausgerichtet und verriegelt werden. Beispielsweise weist die Spanntasse Kerben, Ausnehmungen oder Hinterschnitte auf, in die im Spanntopf beweglich gelagerte Spannelemente (Rollen, Kugel oder dergleichen) im Spannzustand des Nullpunktspannsystems einrücken können. Auf diese Weise kann die Spanntasse in den Spanntopf hineingezogen und dort ausgerichtet werden. Das Nullpunktspannsystem erlaubt eine hochgenaue zentrische Ausrichtung.

Gemäß einer weiteren beispielhaften Ausgestaltung ist der Spanntopf zumindest abschnittsweise rotationssymmetrisch gestaltet, wobei zwischen dem Spanntopf und dem Lagerstück zumindest ein Indexierelement zur Drehausrichtung angeordnet ist. Auf diese Weise kann auch eine hochgenaue Drehausrichtung erfolgen, die für die gewünschte Koaxialität zwischen der Spitzenachse und der Längsachse sorgt. Ferner erlaubt das Nullpunktspannsystem eine genaue zentrische und axiale Positionierung der Wechselspitze.

Das zumindest eine Indexierelement kann beispielhaft einen Stift und eine Ausnehmung umfassen, die jeweils gegenüber der Einführachse (Mittenachse) des Nullpunktspannsystems versetzt sind. Mit anderen Worten gibt es aufeinander abgestimmte außermittige Indexierelemente bei der Wechselspitze und der Aufnahme, so dass die Wechselspitze nur in der gewünschten Drehorientierung eingeführt werden kann.

Die zumindest teilweise rotationssymmetrische Gestaltung des Spanntopfes erlaubt eine günstige Gestaltung der Kontaktfläche zwischen Spanntopf und Spanntasse. Auf diese Weise ergibt sich eine hochsteife Verbindung.

Gemäß einem weiteren Aspekt bezieht sich die vorliegende Offenbarung auf eine Schleifmaschine, insbesondere Rundschleifmaschine, die Folgendes aufweist:
- ein Maschinengestell,
- einen Arbeitsraum,
- einen Werkstückspindelstock zur Aufnahme und zum Antrieb eines Werkstücks um eine Längsachse,
- zumindest einen Schleifspindelstock mit zumindest einer Schleifspindel zur Aufnahme einer rotierbaren Schleifscheibe,
   wobei der Schleifspindelstock und der Werkstückspindelstock relativ zueinander in zumindest zwei Achsen beweglich sind, um die Schleifscheibe in einen Eingriff mit dem Werkstück zu bringen, und
- eine Reitstockbaugruppe gemäß zumindest einer der hierin beschriebenen Ausgestaltungen, die am Maschinengestell angeordnet ist.

Auf diese Weise eignet sich die Schleifmaschine für verschiedene Bearbeitungen, umfassend auch eine Innenbearbeitung. Die Reitstockbaugruppe vereinfacht den Werkstückwechsel und den Wechsel der Spitze.

Gemäß einer weiteren beispielhaften Ausgestaltung ist die Längsachse horizontal orientiert, wobei die Spitzenachse und die Längsachse koaxial orientiert sind. Gemäß einer weiteren beispielhaften Ausgestaltung ist die Einführachse der Reitstockbaugruppe horizontal und senkrecht zur Längsachse/Spitzenachse orientiert.

Gemäß einer weiteren beispielhaften Ausgestaltung ist die Basis der Reitstockbaugruppe an einer Längsführung am Maschinengestell aufgenommen. Auf diese Weise kann die Stellachse der Reitstockbaugruppe nahe beim Maschinengestell angeordnet sein. Mit anderen Worten können also zwei zueinander parallele Führungen übereinander angeordnet sein, die Längsführung am Maschinengestell sowie die Führung zwischen der Basis und dem Tisch der Reitstockbaugruppe. Üblicherweise nutzt die Reitstockbaugruppe die Längsführung am Maschinengestell zur Befestigung, es gibt aber während des Betriebs keine aktive (motorische) Bewegung der Reitstockbaugruppe entlang der Längsführung am Maschinengestell. Üblicherweise wird die Reitstockbaugruppe in einer Längsposition entlang der Längsführung festgelegt. Dies ist nicht einschränkend zu verstehen.

Gemäß einer weiteren beispielhaften Ausgestaltung weist die Schleifmaschine ferner eine Bedienerseite auf, über die der Arbeitsraum zugänglich ist, wobei der Schleifspindelstock bezüglich der Längsachse des Werkstücks auf einer von der Bedienerseite abgewandten Seite angeordnet ist, und wobei zumindest der Aufbau der Reitstockbaugruppe mit der Aufnahme und der Schleifspindelstock auf einander bezüglich der Längsachse des Werkstücks gegenüberliegenden Seiten im Arbeitsraum angeordnet sind.

Aus Sicht der (horizontalen) Längsachse ist die Bedienerseite eine Vorderseite der Schleifmaschine, wobei der Schleifspindelstock in Richtung einer Rückseite von der Längsachse versetzt im Arbeitsraum angeordnet ist.

Auf diese Weise können wesentliche Komponenten der Reitstockbaugruppe, insbesondere der Aufbau, aus Sicht des Bedieners vor der Längsachse angeordnet sein. Auf diese Weise ist das Werkstück gerade auch im Bereich der Spitze gut für Schleifwerkzeuge zugänglich. Die Schleifscheibe ist im Regelfall (vor allem bei Außenbearbeitung) aus Sicht des Bedieners hinter der Längsachse angeordnet.

Gemäß einer weiteren beispielhaften Ausgestaltung trägt der Schleifspindelstock zumindest eine Innenschleifscheibe, wobei die Reitstockbaugruppe eine hohl gestaltete Spitze trägt, durch die die Innenschleifscheibe zu Zwecken der Innenbearbeitung hindurch führbar ist. Auf diese Weise eignet sich die Schleifmaschine insbesondere für das Innenschleifen. Der Schleifspindelstock kann schnell und gegebenenfalls automatisiert umgerüstet werden. Wenn eine Mehrzahl von Wechselspitzen vorgesehen ist, kann die Schleifmaschine schnell an unterschiedliche Bearbeitungsaufgaben angepasst werden.

Gemäß einem weiteren Aspekt bezieht sich die vorliegende Offenbarung auf ein Verfahren zum Spitzenwechsel bei einer Schleifmaschine mit den folgenden Schritten:
- Bereitstellung einer Schleifmaschine gemäß zumindest einer der hierin beschriebenen Ausgestaltungen,
- Bereitstellung zumindest einer Wechselspitze, die bedarfsweise an der Schnittstelle der Reitstockbaugruppe aufgenommen werden kann,
- Bestückung der Reitstockbaugruppe mit der Wechselspitze, die anhand einer anstehenden Bearbeitungsaufgabe gewählt ist, insbesondere umfassend einen automatisierten Wechsel der Wechselspitze unter Nutzung eines Nullpunktspannsystems zwischen der Aufnahme der Reitstockbaugruppe und der Wechselspitze.

In einer beispielhaften Ausgestaltung werden zwei oder mehr Wechselspitzen bereitgestellt, von denen eine geeignete ausgewählt und eingewechselt wird.

Es ist grundsätzlich auch vorstellbar, die aktuell montierte Wechselspitze bewusst auszuwechseln, ohne eine andere Wechselspitze ein zu wechseln. Wenn keine Wechselspitze montiert ist, steht anstelle der Wechselspitze ein freier Raum bereit, der für verschiedene Bearbeitungsaufgaben, Handlingaufgaben und/oder Rüstaufgaben vorteilhaft nutzbar ist.

Der automatisierte Spitzenwechsel kann unter Nutzung von Handhabungstechnik (Laderoboter, Rüstroboter oder dergleichen) erfolgen. In einer beispielhaften Ausgestaltung wird für den Spitzenwechsel auf ohnehin schon bei der Schleifmaschine vorgesehene Handhabungstechnik zurückgegriffen.

Gemäß einem weiteren Aspekt bezieht sich die vorliegende Offenbarung auf eine Verwendung einer offenbarungsgemäßen Reitstockbaugruppe bei einer Schleifmaschine, wobei die Reitstockbaugruppe an einem Maschinengestell festgelegt wird und eine integrierte Stellachse bereitstellt, um eine Spitzenweite zwischen der Reitstockbaugruppe und einer Werkstückspindel zu verändern. Der Tisch mit dem Aufbau kann entlang der Stellachse relativ zur Basis und relativ zum Maschinengestell bewegt werden, um Werkstücke zu spannen oder freizugeben. Ein Wechsel der Wechselspitze kann unter Nutzung eines Nullpunktspannsystems erfolgen.

Es versteht sich, dass die vorstehend genannten und die nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Offenbarung zu verlassen.

Weitere Merkmale und Vorteile der Erfindung ergeben sich aus der nachfolgenden Beschreibung und Erläuterung mehrerer beispielhafter Ausführungsformen unter Bezugnahme auf die Zeichnungen. Es zeigen:
- Fig. 1:: eine perspektivische Ansicht einer Ausführungsform einer Schleifmaschine;
- Fig. 2:: eine vereinfachte, schematische Draufsicht auf einer Schleifmaschine mit einer Reitstockbaugruppe mit einer Spitze;
- Fig. 3:: eine schematische, teilweise geschnittene Ansicht eines zwischen zwei Spitzen aufgenommenen Werkstücks, an dem eine Innenbearbeitung erfolgt;
- Fig. 4:: eine perspektivische, rückwärtige Ansicht einer Reitstockbaugruppe mit einer Schnittstelle für eine Wechselspitze;
- Fig. 5:: eine auf Fig. 4 basierende Ansicht der Reitstockbaugruppe, wobei die Wechselspitze von einer Aufnahme der Schnittstelle gelöst ist;
- Fig. 6:: eine teilweise geschnittene Draufsicht der Reitstockbaugruppe gemäß den Figuren 4 und 5, wobei die Wechselspitze von der Aufnahme der Schnittstelle gelöst ist;
- Fig. 7:: eine rückwärtige Ansicht der Anordnung gemäß Fig. 6;
- Fig. 8-15:: schematische Ansichten von Wechselspitzen, die mit verschiedenartigen Spitzen bestückt sind; und
- Fig. 16:: ein schematisch stark vereinfachtes Blockdiagramm zur Veranschaulichung einer beispielhaften Ausführungsform eines Verfahrens zum Spitzenwechsel bei einer Wechselmaschine.

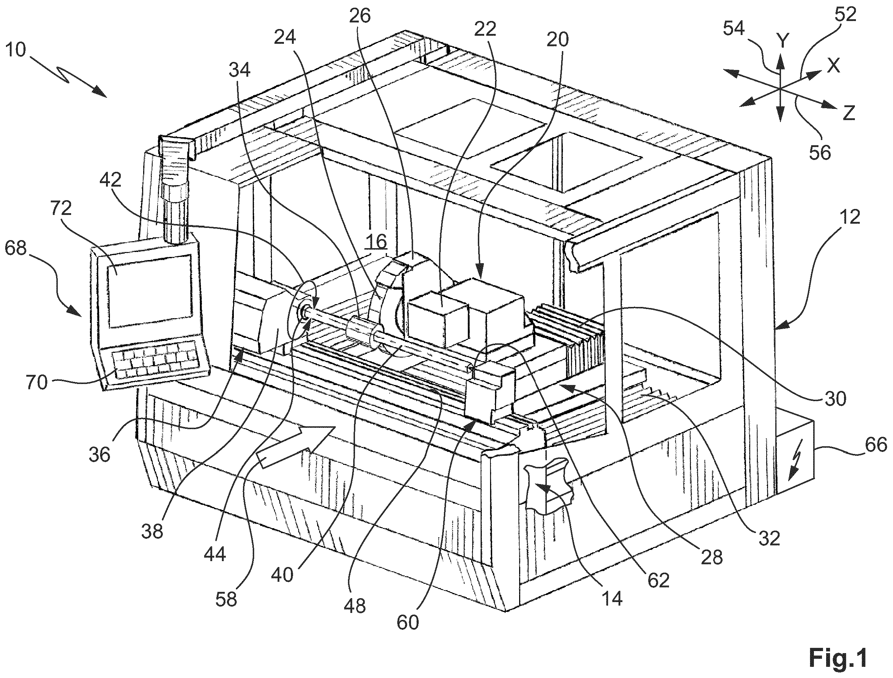

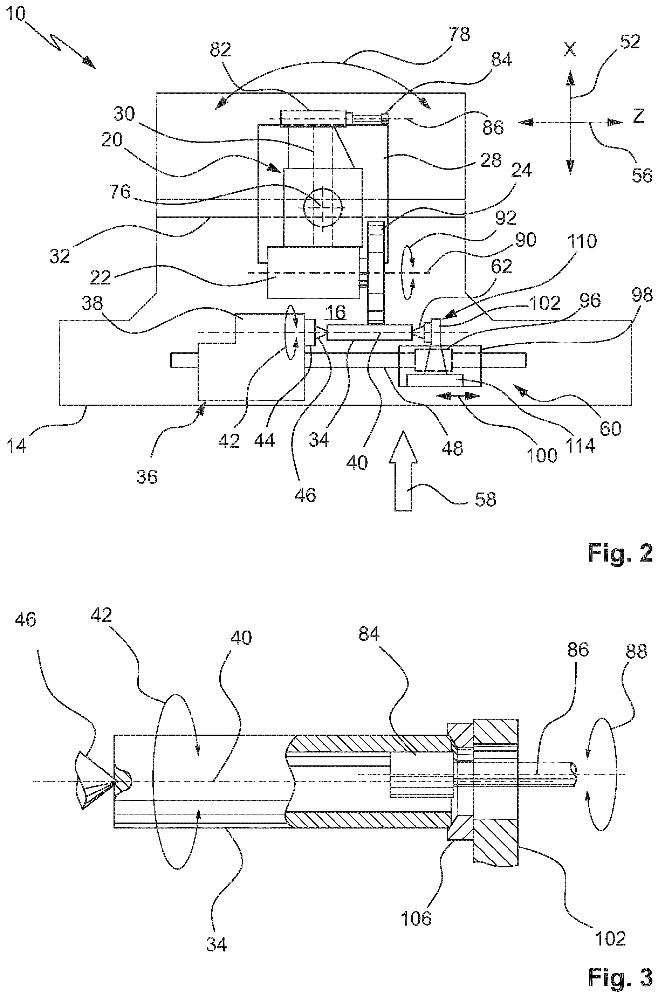

Fig. 1 veranschaulicht anhand einer schematischen, perspektivischen Darstellung eine beispielhafte Ausgestaltung einer insgesamt mit 10 bezeichneten Schleifmaschine. Es versteht sich, dass Schleifmaschinen auch von der Darstellung gemäß Fig. 1 abweichende Gestaltungen aufweisen können. Die Darstellung der Schleifmaschine 10 gemäß Fig. 1 ist exemplarischer Natur und daher nicht einschränkend zu verstehen. Die Schleifmaschine 10 ist hier als Rundschleifmaschine gestaltet. In Ergänzung zu Fig. 1 zeigt Fig. 2 eine schematische Draufsicht einer sehr ähnlichen Gestaltung.

In Fig. 1 ist ein kartesisches Koordinatensystem X, Y, Z angedeutet. Die Z-Achse ist horizontal orientiert und parallel zur Längsachse des Werkstücks. Die Y-Achse ist in Fig. 1 vertikal orientiert und beschreibt eine Höhenerstreckung senkrecht zur Z-Achse. Die X-Achse ist horizontal orientiert und beschreibt eine Tiefenerstreckung (Zustellrichtung). Das Koordinatensystem X, Y, Z dient insbesondere zur Veranschaulichung von Ausführungsbeispielen und Merkmalen und ist nicht einschränkend zu verstehen. Der Fachmann kann gegebenenfalls erforderliche Transformationen ohne weiteres vornehmen.

Die Schleifmaschine 10 weist eine Einhausung 12 auf. Ein Maschinengestell 14 dient als Basis oder Bett für Komponenten der Schleifmaschine 10. Die Einhausung 12 umschließt einen Arbeitsraum 16. Am Maschinengestell 14 ist ein Schleifspindelstock 20 gelagert. Der Schleifspindelstock 20 weist zumindest eine Schleifspindel 22 auf, an der eine Schleifscheibe 24 aufnehmbar ist. In Fig. 1 ist die Schleifscheibe 24 zumindest teilweise durch eine Schutzhaube 26 abgedeckt. Die Schleifscheibe 24 ist durch die Schleifspindel 22 rotatorisch antreibbar.

Im Ausführungsbeispiel gemäß Fig. 1 und Fig. 2 sitzt der Schleifspindelstock 20 auf einem Kreuztisch 28, so dass für Bewegungen des Schleifspindelstocks 20 relativ zum Maschinengestell 14 zwei zueinander orthogonal orientierte Führungen 30, 32 gegeben sind. Die erste Führung 30 ist parallel zur X-Achse. Die zweite Führung 32 ist parallel zur Z-Achse. Auf diese Weise kann die Schleifmaschine 10 als sogenannte Kreuzschlitten-Maschine gestaltet sein. Es sind auch andere kinematische Prinzipien vorstellbar, beispielsweise eine Anordnung in T-Schlitten-Bauweise.

Mit der Schleifscheibe 24 kann ein Werkstück 34 bearbeitet werden. Zur Aufnahme und zum Antrieb des Werkstücks 34 ist ein Werkstückspindelstock 36 mit einer Werkstückspindel 38 verbaut. Das Werkstück 34 ist um seine Längsachse 40 rotatorisch durch die Werkstückspindel 38 antreibbar, vergleiche einen mit 42 bezeichneten, gekrümmten Doppelpfeil in Fig. 1 und Fig. 2.

Die Werkstückspindel 38 weist eine Werkstückaufnahme 44 auf. Der Draufsicht in Fig. 2 ist entnehmbar, dass die Werkstückaufnahme 44 dort als Spitze 46 gestaltet ist. Andere Arten von Werkstückaufnahmen 44 sind vorstellbar, beispielsweise umfassend Spannfutter, Zentrierfutter, Spanndorn sowie Kombinationen aus Spitze und ausgleichendem Futter. Werkstücke können grundsätzlich auch ausschließlich zwischen zwei Spitzen (ohne zusätzliches Spannfutter und/oder Drehmitnehmer) aufgenommen sein.

Das Maschinengestell 14 trägt eine Längsführung 48, die sich parallel zur Längsachse 40 erstreckt. Beispielsweise ist der Werkstückspindelstock 36 an der Längsführung 48 aufgenommen. Die Längsführung 48 kann auch zur Aufnahme weiterer Komponenten der Schleifmaschine 10 genutzt werden.

Dem Koordinatensystem X-Y-Z sind in Fig. 1 Achsen 52, 54, 56 zugeordnet. Eine Relativbewegung zwischen dem Schleifspindelstock 20 und dem Werkstückspindelstock 36 bzw. dem daran aufgenommenen Werkstück 34 entlang der Achsen 52, 56 erlaubt einen Eingriff der Schleifscheibe 24 an das Werkstück 34. Die Achse 52 kann beispielhaft als Zustellachse bezeichnet werden. Die Achse 56 kann beispielhaft als Vorschubachse bezeichnet werden. Die Achse 54 ist eine vertikale Achse, entlang der jedoch üblicherweise keine Relativbewegung zwischen dem Schleifspindelstock 20 und dem Werkstückspindelstock 36 erfolgen muss.

In den Figuren 1 und 2 bezeichnet ein mit 58 bezeichneter Blockpfeil eine Bedienerseite der Schleifmaschine 10. Die Bedienerseite 58 ist üblicherweise diejenige Seite, an der Sichtfenster und/oder Türen für einen Maschinenbediener bereitstehen, der Vorgänge im Arbeitsraum 16 einsehen und überwachen will. Auch kann es an der Bedienerseite 58 Zugangsmöglichkeiten für einen Zugang zum Arbeitsraum 16 geben, beispielsweise für Rüstarbeiten, Instandhaltungsarbeiten und dergleichen.

Das Maschinengestell 14 trägt ferner eine Reitstockbaugruppe 60, die im Ausführungsbeispiel ebenso an der Längsführung 48 festgelegt ist. Die Reitstockbaugruppe 60 und der Werkstückspindelkopf 36 sind voneinander beabstandet und einander zugewandt. Das Werkstück 34 ist zwischen der Reitstockbaugruppe 60 und dem Werkstückspindelkopf 36 eingespannt. Die Reitstockbaugruppe 60 trägt eine Spitze 62, die an das Werkstück 34 zur Zentrierung angreift. Im Ausführungsbeispiel gemäß Fig. 2 ist das Werkstück 34 zwischen zwei Spitzen 46, 62 eingespannt. Die Drehmitnahme erfolgt beispielhaft über die Spitze 46 der Werkstückspindel 38. Die Spitze 62 bei der Reitstockbaugruppe 60 ist beispielhaft eine stehende Spitze. Es ist jedoch grundsätzlich auch eine Gestaltung der Spitze 62 als mitdrehende Spitze vorstellbar.

Zur Steuerung der Schleifmaschine 10 ist eine Steuereinrichtung 66 vorgesehen, die in Fig. 1 lediglich schematisch angedeutet ist. Die Schleifmaschine 10 ist üblicherweise eine numerisch gesteuerte (NC oder CNC) Werkzeugmaschine. Insbesondere handelt es sich bei der Steuereinrichtung 66 um eine Einheit zur NC-basierten oder CNCbasierten Steuerung der Schleifmaschine 10. Es versteht sich, dass die Schleifmaschine 10 auch über externe Steuereinrichtungen steuerbar ist. Ferner sind Ausgestaltungen mit verteilter Steuerung bekannt, bei denen bestimmte Steuerungsaufgaben von in die Schleifmaschine 10 integrierten Einrichtungen und andere Steuerungsaufgaben von externen Einrichtungen ausgeführt werden.

Der Bediener kann die Schleifmaschine 10 über eine Bedienerschnittstelle 68 steuern, die ebenso an der Bedienerseite 58 zugänglich ist. Die Bedienerschnittstelle 68 kann beispielhaft als Bedienpanel bezeichnet werden. Die Bedienerschnittstelle 68 kann in grundsätzlich bekannter Weise Eingabeeinheiten 70 und/oder Ausgabeeinheiten 72 umfassen. Insbesondere bei sogenannten Touchscreens (Berührbildschirme) kann die Eingabe und Ausgabe an ein und demselben Element erfolgen.

In Ergänzung zu Fig. 1 veranschaulicht Fig. 2 eine Gestaltung der Schleifmaschine 10 mit einer sogenannten B-Achse 76. Die B-Achse 76 ist eine Schwenkachse für den Schleifspindelstock 20, die parallel zur Y-Richtung (senkrecht zur Ansichtsebene in Fig. 2) orientiert ist. Die Schwenkbewegung ist in Fig. 2 durch einen mit 78 bezeichneten gekrümmten Doppelpfeil angedeutet. Die B-Achse 76 ermöglicht eine Schrägstellung der Schleifspindel 22 mit der Schleifscheibe 24 gegenüber dem Werkstück 34 bzw. der Längsachse 40. Es ist jedoch auch vorstellbar, unter Nutzung der B-Achse 76 Schleifspindelstöcke 20 mit mehreren Schleifspindeln 22, 82 zu verwenden.

Der Schleifspindelstock 20 gemäß Fig. 2 weist neben der Schleifspindel 22, die eine für die Außenbearbeitung geeignete Schleifscheibe 24 trägt, eine weitere Schleifspindel 82 auf, die eine für die Innenbearbeitung geeignete Schleifscheibe 84 trägt. In Ergänzung zu Fig. 2 veranschaulicht Fig. 3 anhand einer schematischen Darstellung eine Innenbearbeitung des Werkstücks 34 mit der Schleifscheibe 84. Damit die Schleifscheibe 84 auf das Werkstück 34 einwirken kann, muss der Schleifspindelstock 20 um die B-Achse verschwenkt werden, im Ausführungsbeispiel um 180° ausgehend von der in Fig. 2 gezeigten Stellung. Ferner kann der Schleifspindelstock 20 und damit die Schleifspindel 82 mit der Schleifscheibe 84 entlang der Führungen 30, 32 unter Nutzung des Kreuzschlittens 28 entlang der Achsen 52 (X-Richtung) und 56 (Z-Richtung) bewegt werden, um die Schleifscheibe 84 in das Werkstück 34 einzuführen.

Die Schleifscheibe 84 ist durch die Schleifspindel 82 um eine Spindelachse 86 rotierbar, vergleiche den gekrümmten Doppelpfeil 88 in Fig. 3. Gleichermaßen ist die Schleifscheibe 24 durch die Schleifspindel 22 um eine Spindelachse 90 rotierbar, vergleiche den gekrümmten Doppelpfeil 92 in Fig. 2. In Fig. 2 greift die Schleifscheibe 24 an das Werkstück 34 an. Es ist eine Außenbearbeitung (zum Beispiel Außenrundschleifen oder Außenunrundschleifen) möglich. In Fig. 3 greift die Schleifscheibe 84 an das Werkstück 34 an. Es ist eine Innenbearbeitung (zum Beispiel Innenrundschleifen oder Innenunrundschleifen) möglich.

In Fig. 2 ist die Spindelachse 90 der Schleifscheibe 24 parallel zur Längsachse 40 orientiert. In Fig. 3 ist die Spindelachse 86 der Schleifscheibe 84 parallel zur Längsachse 40 orientiert. Es versteht sich, dass für bestimmte Bearbeitungsaufgaben auch eine nicht-parallele Orientierung vorstellbar ist, beispielsweise für das Schrägeinstechschleifen. Dies gilt sowohl für die Außenbearbeitung der Schleifscheibe 24 als auch für die Innenbearbeitung mit der Schleifscheibe 84.

Der schematischen Gestaltung gemäß Fig. 2 ist ferner entnehmbar, dass die Reitstockbaugruppe 60 eine Basis 96 (verdeckt gezeigt) und einen Tisch 98 aufweist, der an der Basis 96 gelagert ist. Im Ausführungsbeispiel ist der Tisch 98 entlang einer Stellachse 100 relativ zur Basis 96 verfahrbar. Auf diese Weise kann die Reitstockbaugruppe 60 einen Hub in der Z-Richtung (Achse 56) parallel zur Längsachse 40 bereitstellen.

An der Basis 96 ist ein Aufbau 114 angeordnet, der ein Lagerstück 102 trägt, an dem wiederum die Spitze 62 aufgenommen ist. Das Lagerstück 102 und die Spitze 62 können gemeinsam eine Wechselspitze 110 bilden. In Fig. 2 ist das Werkstück 34 zur Außenbearbeitung zwischen den beiden Spitzen 46, 62 aufgenommen.

In Fig. 3 ist hingegen am Lagerstück 102 eine mit 106 bezeichnete Hohlspitze angeordnet. Das Werkstück 34 ist zwischen der Spitze 46 und der Hohlspitze 106 aufgenommen. Die Hohlspitze weist eine konisch gestaltete Innenkontur auf, deren (gedachte) Spitze vom Werkstück 34 abgewandt ist. Die für die Innenbearbeitung geeignete Schleifscheibe 84 weist einen Durchmesser auf, der ein Einfahren in eine Öffnung des Werkstücks 34 durch die Hohlspitze 106 (und gegebenenfalls auch durch das Lagerstück 102) hindurch erlaubt. Die Hohlspitze 106 kann das Werkstück 34 an einer Außenkante halten und zentrieren. Wäre statt einer Hohlspitze 106 eine massive Spitze (Vollspitze) verbaut, könnte die Schleifscheibe 84 an dieser Stirnseite des Werkstücks 34 nicht in das Werkstück 34 einfahren.

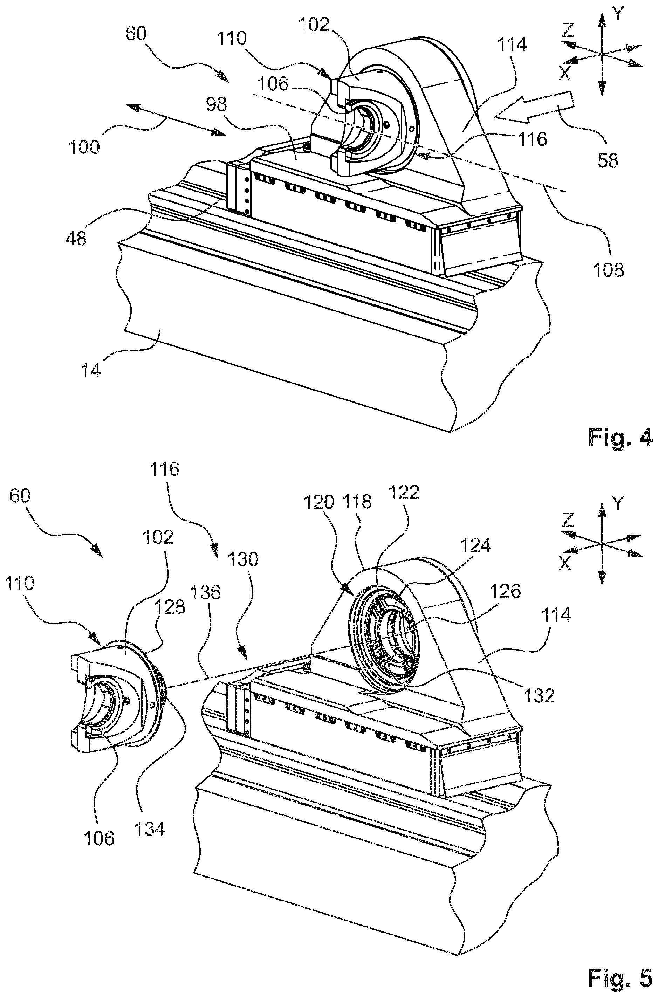

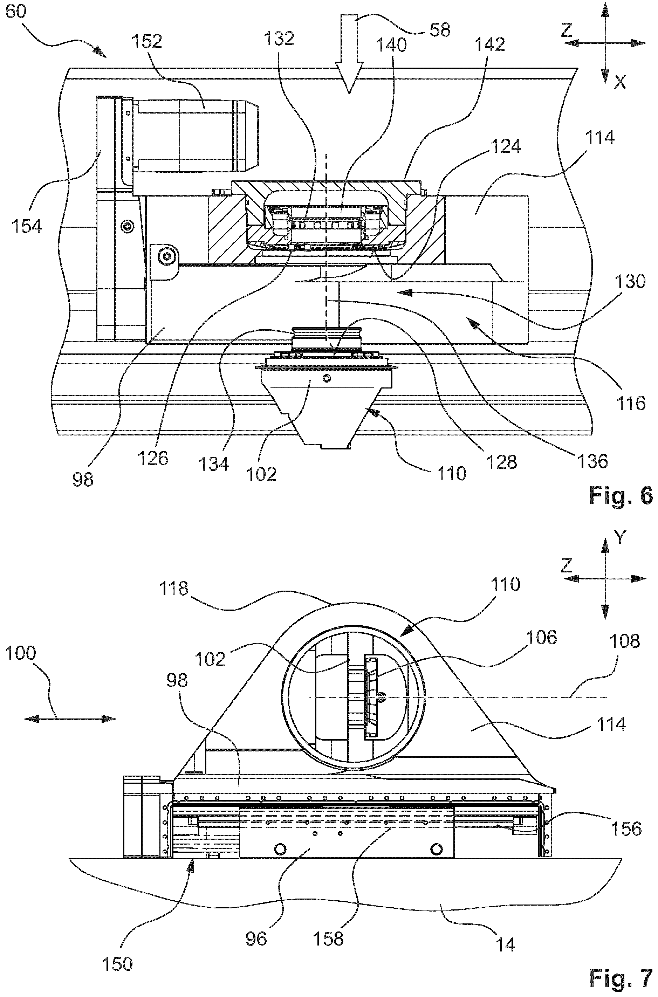

Mit ergänzender Bezugnahme auf die Figuren 4-7 werden beispielhafte Ausgestaltungen der Reitstockbaugruppe 60 näher beschrieben und veranschaulicht. In den Figuren 4-7 trägt die am Aufbau 114 aufgenommene Wechselspitze 110 eine Spitze 106, die als Halbhohlspitze gestaltet ist. Dies ist nicht einschränkend zu verstehen. In den Figuren 4 und 6 veranschaulicht der Blockpfeil 58 (Bedienerseite) die jeweilige Orientierung. Ferner ist in den Figuren 4-7 zur Veranschaulichung der Orientierung jeweils das Koordinatensystem X-Y-Z angedeutet, wobei die Zuordnung der Achsbezeichnungen X-Y-Z jeweils nach der Rechte-Hand-Regel erfolgt.

In Fig. 4 ist eine sich durch die Gestaltung und Orientierung der Wechselspitze 110 ergebende Spitzenachse mit 108 bezeichnet. Die Spitzenachse 108 ist parallel zur Stellachse 100. Die Wechselspitze 110 ist am Aufbau 114 aufgenommen, dort ergibt sich eine Schnittstelle 116 für die Wechselspitze 110. Die Reitstockbaugruppe 60 ist mittelbar oder unmittelbar am Maschinengestell 14 aufgenommen, beispielsweise an der Längsführung 48. Der Tisch 98 kann mit dem Aufbau 114 und folglich der Wechselspitze 110 entlang der Stellachse 100 relativ zum Maschinengestell 14 verfahren werden. Diese Bewegung umfasst eine Relativbewegung zwischen dem Tisch 98 und der Basis 96 (in Fig. 4 verdeckt, vergleiche Fig. 7), die im Ausführungsbeispiel am Maschinengestell 14 festgelegt ist.

Die Figuren 4 und 5 zeigen bei ansonsten gleicher Gestaltung und Orientierung die Wechselspitze 110 in einem montierten Zustand (Fig. 4) und in einem gelösten Zustand (Fig. 5). Im Rahmen der vorliegenden Offenbarung wird eine Schnittstelle 116 bereitgestellt, die einen schnellen und einfachen Wechsel der Wechselspitze 110 erlaubt und gleichzeitig eine hochpräzise Ausrichtung ermöglicht.

Der Aufbau 114 ist als Erhebung 118 gestaltet, die sich ausgehend vom Tisch 98 erstreckt. Im Ausführungsbeispiel erstreckt sich die Erhebung 118 vertikal in der Y-Richtung sowie zur Spitzenachse 108 horizontal in der Z-Richtung parallel (vergleiche Fig. 4). Die Erhebung 118 ähnelt einem Lagerbock. Der Aufbau 114 beherbergt eine Aufnahme 120, die zumindest eine Anlagefläche 122 für das Lagerstück 102 der Wechselspitze 110 bereitstellt. Mit anderen Worten kann auf diese Weise eine stirnseitige Anlage des Lagerstücks 102 an/in der Aufnahme 120 bewerkstelligt werden. Zwischen der Aufnahme 120 und dem Lagerstück 102 sind einander zugewandte Kontaktflächen 124, 128 (vergleiche auch Fig. 6) ausgebildet. Es kann sich hierbei um stirnseitige Kontaktflächen, aber auch um einander zugewandte Zylinderflächen handeln.

Ferner weist die Aufnahme 120 im Ausführungsbeispiel zumindest ein Indexierelement 126 auf, beispielsweise zumindest einen Positionierstift bei der Aufnahme 120 oder dem Lagerstück 102, der in eine entsprechende Ausnehmung am gegenüberliegenden Teil einrücken kann. Auf diese Weise kann eine Drehorientierung der Wechselspitze 110 an der Schnittstelle 116 hochgenau festgelegt werden.

Insbesondere kann die Schnittstelle 116 zwischen der Reitstockbaugruppe 60 und der Wechselspitze 110 durch ein Nullpunktspannsystem 130 realisiert werden. Im Ausführungsbeispiel ist ein einziger Nullpunktspanner verbaut. Das Nullpunktspannsystem 130 umfasst einen Spanntopf 132 und eine korrespondierende Spanntasse 134, die ineinander einrücken können. Im Ausführungsbeispiel umfasst das Nullpunktspannsystem 130 genau einen Spanntopf 132 und genau eine Spanntasse 134.

Die Einführbewegung und die Lösebewegung zwischen der Wechselspitze 110 und der Aufnahme 120 erfolgt entlang einer Einführachse 136, die im Ausführungsbeispiel orthogonal zur Spitzenachse 108 und damit orthogonal zur Längsachse 40 (vergleiche Fig. 2) orientiert ist.

Fig. 6 zeigt eine Draufsicht auf die Reitstockbaugruppe 60 gemäß Fig. 5, wobei der Aufbau 114 in Fig. 6 in einer Ebene parallel zur Einführachse 136 geschnitten ist. Der Aufbau 114 weist eine Ausnehmung 140 auf, die den die Aufnahme 120 bildenden Spanntopf 132 beherbergt. Im Ausführungsbeispiel ist die Ausnehmung 140 in Richtung auf die Bedienerseite 58 durch einen Deckel 142 abgedeckt. Aus Sicht eines Bedieners, der die Reitstockbaugruppe 60 von der Bedienerseite 58 aus betrachtet, sitzt die Wechselspitze 110 hinter dem Aufbau 114, der die Aufnahme 120 trägt. Mit anderen Worten kragt die Wechselspitze 110 ausgehend vom Aufbau 114 in der X-Richtung in Richtung auf die Rückseite (weg von der Bedienerseite 58) aus. In dieser Stellung ist die Wechselspitze 110 mit der daran aufgenommenen Spitze 106 (vergleiche auch Fig. 7) gut für eine Innenbearbeitung zugänglich. Allgemein herrscht eine gute Zugänglichkeit, dies kann auch bei der Außenbearbeitung von Vorteil sein.

Die Wechselspitze 110 mit der Spanntasse 134 am Lagerstück 102 kann entlang der Einführachse 136 in den Spanntopf 132 einrücken. Dort ist eine kraftschlüssige und/oder formschlüssige Fixierung und Verriegelung möglich. Unter Nutzung von Indexierelementen 126, die von der Einführachse 136 beabstandet sind, kann eine Drehausrichtung der Aufnahme 102 und damit der Wechselspitze 110 erfolgen.

Im Ausführungsbeispiel gemäß den Figuren 4-7 ist die Einführachse 136 gleichzeitig Mittenachse des Nullpunktspannsystems 130. Die Spanntasse 134 weist an ihrem Umfang zumindest eine Ausnehmung auf, Beispielsweise eine umlaufende Nut, in die im Spanntopf 132 Spannelemente einrücken können. Die Spannelemente sind beispielsweise Spannkugeln, Rollen, Walzen und dergleichen. Das Einsetzen oder Entnehmen der Wechselspitze 110 in die Aufnahme 120 kann händisch oder automatisiert erfolgen. Das Nullpunktspannsystem 130 kann mit geeigneten Aktoren (mechanische Aktoren, elektromechanische Aktoren, fluidische Aktoren) gekoppelt sein, um die erforderlichen Bewegungen zum Spannen/Verriegeln und Entspannen/Freigeben zu erzeugen.

Anhand einer Zusammenschau der Figuren 6 und 7 wird ein mit 150 bezeichneter Antrieb der Reitstockbaugruppe 60 erläutert. Der Antrieb 150 dient zur Bewegung des Tisches 98 mit dem Aufbau 114 relativ zur Basis 96 entlang der Stellachse 100. Der Antrieb 150 umfasst im Ausführungsbeispiel einen Motor 152, der an einem Ausleger 154 befestigt ist, der an den Tisch 98 ankoppelt und seitlich vom Tisch 98 auskragt. Der Ausleger 154 erstreckt sich seitlich in der X-Richtung in Richtung auf die Bedienerseite 58. Daher kann der Motor 152 neben dem Tisch 98 angeordnet sein. An der Unterseite des Tisches 98 ist zumindest eine Schiene 156 angeordnet, die mit zumindest einer Führung 158 an der Oberseite der Basis 96 gekoppelt ist. Der Antrieb kann dann über eine Gewindespindel oder dergleichen erfolgen. Die Anordnung des Motors 152 hat den Vorteil, dass der Bereich um die Spitzenachse 108 nicht verbaut wird.

Wenn der Tisch 98 mit der Wechselspitze 110 entlang der Stellachse 110 verfahrbar ist, lässt sich beispielhaft ein Werkstückwechsel vereinfachen. Mit anderen Worten kann die Wechselspitze 110 entlang der Stellachse 100 von der gegenüberliegenden Werkstückaufnahme 44 (vergleiche Fig. 2) wegbewegt werden, um das Werkstück 34 freizugeben. In ähnlicher Weise kann die Bewegung entlang der Stellachse 100 auch genutzt werden, um unterschiedlich lange Werkstücke 34 nacheinander bearbeiten zu können.

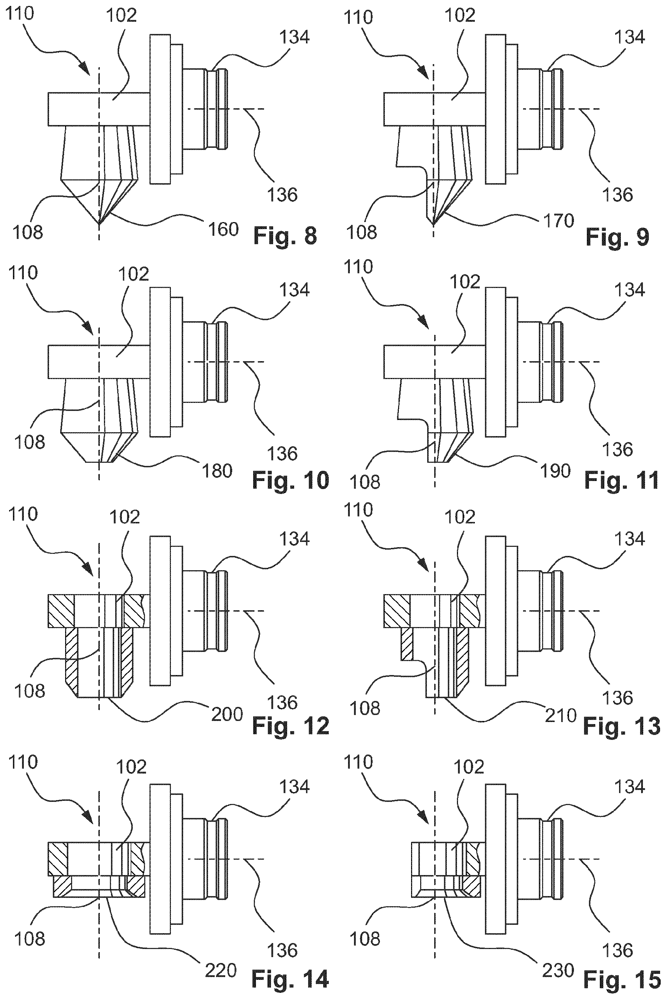

Mit Bezugnahme auf die Figuren 8-15 werden verschiedene Ausgestaltungen von Wechselspitzen 110 veranschaulicht, die wahlweise bei der Reitstockbaugruppe 60 verwendbar sind. Die Wechselspitzen umfassen jeweils ein Lagerstück 102 sowie eine Spanntasse 134, die entlang einer Einführachse 136 in einen Spanntopf 132 eines Nullpunktspannsystems 130 einführbar ist. Für die Spitze ergibt sich jeweils eine Spitzenachse 108.

Fig. 8 zeigt eine Wechselspitze 110 mit einer Vollspitze 160. Fig. 9 zeigt eine Wechselspitze 110 mit einer Halbspitze 170. Fig. 10 zeigt eine Wechselspitze 110 mit einer Kegelstumpfspitze 180. Fig. 11 zeigt eine Wechselspitze 110 mit einer Kegelstumpfhalbspitze 190. Fig. 12 zeigt eine Wechselspitze 110 mit einer hohlen Spitze 200. Fig. 13 zeigt eine Wechselspitze 110 mit einer hohlen Halbspitze 210. Fig. 14 zeigt eine Wechselspitze 110 mit einer Hohlspitze 220. Fig. 15 zeigt eine Wechselspitze 110 mit einer Halbholspitze 230. Eine Gegenüberstellung der Figuren 12 und 13 mit den Figuren 14 und 15 veranschaulicht den weiter oben bereits erläuterten Unterschied zwischen einer hohlen Spitze/Halbspitze und einer Hohlspitze/Halbholspitze.

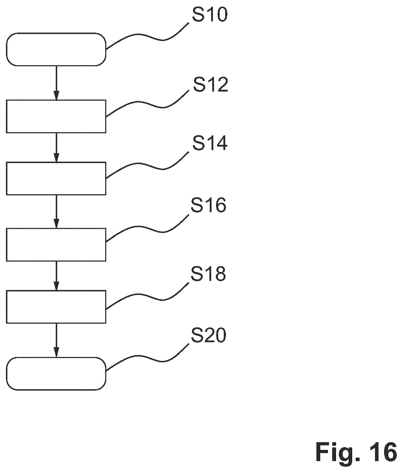

Fig. 16 veranschaulicht anhand eines schematisch dargestellten Blockdiagramms eine beispielhafte Ausgestaltung eines Verfahrens zum Spitzenwechsel bei einer Schleifmaschine. Das Verfahren beginnt bei einem Schritt S10.

Ein Schritt S12 bezieht sich auf die Bereitstellung einer Schleifmaschine, die mit einer offenbarungsgemäßen Reitstockbaugruppe ausgerüstet ist. Auf diese Weise ist die Schleifmaschine für einen vereinfachten Spitzenwechsel ertüchtigt. Ein weiterer Schritt S14 betrifft die Bereitstellung eines Satzes aus zwei oder mehr Wechselspitzen, die unterschiedlichen Spitzentypen entsprechen können.

Ein weiterer Schritt S16 betrifft die Wahl einer für eine aktuelle Bearbeitungsaufgabe geeigneten Spitze. Dies kann beispielhaft bei der Innenbearbeitung eine zumindest teilweise hohl gestaltete Spitze betreffen.

Ein weiterer Schritt S18 betrifft die Bestückung der Reitstockbaugruppe. Dies kann das Auswechseln einer an der Schnittstelle montierten Wechselspitze und das Einwechseln der gewünschten Wechselspitze umfassen. Der Spitzenwechsel kann manuell, teilautomatisiert oder vollständig automatisiert erfolgen.

Das Verfahren endet bei einem Schritt S20. Insgesamt erlaubt das Verfahren

## Patentansprüche

1. Reitstockbaugruppe (60) für eine Schleifmaschine (10), die Folgendes aufweist:
- eine Basis (96),
- einen Tisch (98), der an der Basis (96) gelagert und insbesondere relativ zur Basis (96) verfahrbar ist,
wobei der Tisch (98) einen Aufbau (114) trägt, der eine Schnittstelle (116) mit einer Aufnahme (120) für ein eine Spitze (62, 106, 160, 170, 180, 190, 200, 210, 220, 230) tragendes Lagerstück (102) zur Werkstückaufnahme bereitstellt,
wobei die Spitze (62, 106, 160, 170, 180, 190, 200, 210, 220, 230) eine Spitzenachse (108) aufweist, und
wobei die Schnittstelle (116) seitlich gegenüber der Spitzenachse (108) versetzt ist.

2. Reitstockbaugruppe (60) nach Anspruch 1, wobei der Tisch (98) entlang einer Stellachse (100) relativ zur Basis (96) verfahrbar ist, wobei die Stellachse (100) parallel zur Spitzenachse (108) ist, und insbesondere aufweisend einen Antrieb (150) zur translatorischen Bewegung des Tisches (98) relativ zur Basis (96), wobei der Antrieb einen Motor (152) umfasst, der insbesondere an einer von der Spitze (62, 106, 160, 170, 180, 190, 200, 210, 220, 230) abgewandten Seite des Aufbaus (114) an den Tisch (98) ankoppelt.

3. Reitstockbaugruppe (60) nach Anspruch 1 oder 2, wobei die Aufnahme (120) zur Aufnahme des Lagerstücks (102) ausgebildet ist, das die Spitze (62, 106, 160, 170, 180, 190, 200, 210, 220, 230) trägt, wobei das Lagerstück (102) und die Spitze (62, 106, 160, 170, 180, 190, 200, 210, 220, 230) eine Wechselspitze (110) bilden, und/oder wobei die Aufnahme (120) eine Anlagefläche (122) für das Lagerstück (102) aufweist, die parallel zur Spitzenachse (108) ist.

4. Reitstockbaugruppe (60) nach einem der Ansprüche 1-3, wobei die Aufnahme (120) und das Lagerstück (102) einander zugewandte Kontaktflächen (124, 128) aufweisen, insbesondere ringförmige oder ringabschnittsförmige Kontaktflächen (124, 128).

5. Reitstockbaugruppe (60) nach einem der Ansprüche 1-4, wobei der Aufbau (114) an einer einem Schleifspindelstock (20) gegenüberliegenden Seite der Spitzenachse (108) angeordnet ist, insbesondere an einer Bedienerseite (58), und/oder wobei der Aufbau (114) eine Ausnehmung (140) aufweist, die sich orthogonal zur Spitzenachse (108) erstreckt und die Aufnahme (120) beherbergt.

6. Reitstockbaugruppe (60) nach einem der Ansprüche 1-5, wobei der Aufbau (114) als Erhebung (118) gegenüber dem Tisch (98) gestaltet ist, deren erste Haupterstreckungsrichtung parallel zur Spitzenachse (108) und deren zweite Haupterstreckungsrichtung orthogonal zu einer Grundfläche des Tisches (98) ist.

7. Reitstockbaugruppe (60) nach einem der Ansprüche 1-6, wobei die Schnittstelle (116) eine Einführachse (136) zwischen der Aufnahme (120) und dem die Spitze (62, 106, 160, 170, 180, 190, 200, 210, 220, 230) tragenden Lagerstück (102) umfasst, und wobei die Einführachse (136) horizontal und relativ zur Spitzenachse (108) schräg, insbesondere senkrecht, orientiert ist.

8. Reitstockbaugruppe (60) nach einem der Ansprüche 1-7, wobei die Spitze (62, 106, 160, 170, 180, 190, 200, 210, 220, 230) aus der Gruppe ausgewählt ist, die Folgendes umfasst: Vollspitze, Halbspitze, Hohlspitze, Halbhohlspitze, Kegelstumpfspitze, Kegelstumpfhalbspitze, hohle Spitze und hohle Halbspitze, und insbesondere wobei die Reitstockbaugruppe (60) einen Satz aus zwei oder mehr unterschiedlichen Wechselspitzen (110) umfasst, die bedarfsweise an der Schnittstelle (116) gewechselt werden können.

9. Reitstockbaugruppe (60) nach einem der Ansprüche 1-8, wobei die Schnittstelle (116) ein Nullpunktspannsystem (130) zur Befestigung und Ausrichtung des Lagerstücks (102) mit der Spitze (62, 106, 160, 170, 180, 190, 200, 210, 220, 230) an der Aufnahme (120) umfasst.

10. Reitstockbaugruppe (60) nach Anspruch 9, wobei das Nullpunktspannsystem (130) bei der Aufnahme (120) einen einzigen Spanntopf (132) und bei dem Lagerstück (102) eine einzige Spanntasse (134) aufweist, wobei das Nullpunktspannsystem (130) in einem Spannzustand das Lagerstück (102) am Spanntopf (132) sichert, wobei die Spanntasse (134) in den Spanntopf (132) eingerückt ist, und in einem Freigabezustand das Lagerstück (102) zur Entnahme vom Spanntopf (132) freigibt, und insbesondere wobei der Spanntopf (132) zumindest abschnittsweise rotationssymmetrisch gestaltet und zwischen dem Spanntopf (132) und dem Lagerstück (102) zumindest ein Indexierelement (126) zur Drehausrichtung angeordnet ist.

11. Schleifmaschine (10), insbesondere Rundschleifmaschine, die Folgendes aufweist:
- ein Maschinengestell (14),
- einen Arbeitsraum (16),
- einen Werkstückspindelstock (36) zur Aufnahme und zum Antrieb eines Werkstücks (34) um eine Längsachse (40),
- zumindest einen Schleifspindelstock (20) mit zumindest einer Schleifspindel (22, 82) zur Aufnahme einer rotierbaren Schleifscheibe (24, 84),
wobei der Schleifspindelstock (20) und der Werkstückspindelstock (36) relativ zueinander in zumindest zwei Achsen (52, 56) beweglich sind, um die Schleifscheibe (24, 84) in einen Eingriff mit dem Werkstück (34) zu bringen, und
- eine Reitstockbaugruppe (60) nach einem der Ansprüche 1-10, die am Maschinengestell (14) angeordnet ist.

12. Schleifmaschine (10) nach Anspruch 11, wobei die Längsachse (40) horizontal orientiert ist, und wobei die Spitzenachse (108) und die Längsachse (40) koaxial orientiert sind, und/oder wobei die Basis (96) der Reitstockbaugruppe (60) an einer Längsführung (48) am Maschinengestell (14) aufgenommen ist.

13. Schleifmaschine (10) nach Anspruch 11 oder 12, ferner aufweisend eine Bedienerseite (58), über die der Arbeitsraum (16) zugänglich ist, wobei der Schleifspindelstock (20) bezüglich der Längsachse (40) des Werkstücks (34) auf einer von der Bedienerseite (58) abgewandten Seite angeordnet ist, und wobei zumindest der Aufbau (114) der Reitstockbaugruppe (60) mit der Aufnahme (120) und der Schleifspindelstock (20) auf einander bezüglich der Längsachse (40) des Werkstücks (34) gegenüberliegenden Seiten im Arbeitsraum (16) angeordnet sind.

14. Schleifmaschine (10) nach einem der Ansprüche 11-13, wobei der Schleifspindelstock (20) zumindest eine Innenschleifscheibe (82) trägt, und wobei die Reitstockbaugruppe (60) eine hohl gestaltete Spitze (62, 106, 160, 170, 180, 190, 200, 210, 220, 230) trägt, durch die die Innenschleifscheibe (82) zu Zwecken der Innenbearbeitung hindurch führbar ist.

15. Verfahren zum Spitzenwechsel bei einer Schleifmaschine (10) mit den folgenden Schritten:
- Bereitstellung einer Schleifmaschine (10) nach einem der Ansprüche 11-14,
- Bereitstellung zumindest einer Wechselspitze (110), die bedarfsweise an der Schnittstelle (116) der Reitstockbaugruppe (60) aufgenommen werden kann,
- Bestückung der Reitstockbaugruppe (60) mit der Wechselspitze (110), die anhand einer anstehenden Bearbeitungsaufgabe gewählt ist, insbesondere umfassend einen automatisierten Wechsel der Wechselspitze (110) unter Nutzung eines Nullpunktspannsystems (130) zwischen der Aufnahme (120) der Reitstockbaugruppe (60) und der Wechselspitze (110).
